# EUROPEAN PATENT APPLICATION

(11) **EP 4 737 310 A1**
(43) Date of publication of application: **06.05.2026**
(21) Application number: 25212051.4
(22) Date of filing: 29.10.2025
(51) Int. Cl.: B64C 11/00, B64C 1/40, B22F 5/04, B33Y 80/00, F01D 5/16, B64C 21/02, B64C 1/26

(54) **SWIRL RECOVERY VANE WITH ACOUSTIC TREATMENT, GAS TURBINE ENGINE AND PROCESS FOR FORMING A SWIRL RECOVERY VANE**

(30) Priority: 31.10.2024 US 202418933508
(71) Applicant: RTX Corporation, Farmington, CT 06032 (US)
(72) Inventor: Yazici, Murat, Glastonbury, 06033 (US); Breault, Andrew E., Bolton, 06043 (US); Morton, Jeffrey T., Glastonbury, 06033 (US)
(74) Representative: Schmitt-Nilson Schraud Waibel Wohlfrom Patentanwälte Partnerschaft mbB

(57) **Abstract**

A swirl recovery vane with acoustic treatment including a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic zone integrally formed within the swirl recovery vane. A gas turbine engine includes the swirl recovery vane with acoustic treatment. A process forms the swirl recovery vane with acoustic treatment.

## Description

The present disclosure is directed to the improved acoustic zone integrally formed in a swirl recovery vane structure.

The swirl recovery vane pattern is defined to meet structural, performance and acoustic requirements across a wide range of operating conditions. Engine noise is challenging for open rotor architectures. Engine and airframe makers are looking for more opportunities for noise reduction. At the engine side, acoustic treatable areas are limited. Swirl recovery vanes are an area for noise reduction opportunities.

In accordance with the present disclosure, there is provided a swirl recovery vane with acoustic treatment comprising a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic zone formed within the swirl recovery vane.

Particular embodiments further may include at least one, or a plurality of, the following optional features, alone or in combination with each other:

A further embodiment of any of the foregoing embodiments may additionally and/or alternatively include the acoustic zone is formed in the swirl recovery vane at predetermined locations along the span of the swirl recovery vane.

A further embodiment of any of the foregoing embodiments may additionally and/or alternatively include the acoustic zone is located on the pressure side.

A further embodiment of any of the foregoing embodiments may additionally and/or alternatively include the acoustic zone extends at least one of spanwise through the swirl recovery vane between the attachment region and the tip region or chordwise between the leading edge and the trailing edge.

A further embodiment of any of the foregoing embodiments may additionally and/or alternatively include the swirl recovery vane with acoustic treatment further comprising the acoustic treatment formed within the acoustic zone, the acoustic treatment configured to dissipate sound energy.

A further embodiment of any of the foregoing embodiments may additionally and/or alternatively include the acoustic zone is configured integral with the material of the swirl recovery vane.

A further embodiment of any of the foregoing embodiments may additionally and/or alternatively include the acoustic zone is located adjacent a structural region.

In accordance with the present disclosure, there is provided a gas turbine engine with a swirl recovery vane with acoustic treatment comprising a propulsor rotor located within an open environment; an array of swirl recovery vanes supported downstream from the propulsor rotor, the array of swirl recovery vanes attached to a nacelle flow surface; a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane; an acoustic zone integrally formed within the swirl recovery vane; and a structural region adjacent the acoustic zone.

A further embodiment of any of the foregoing embodiments may additionally and/or alternatively include the acoustic zone is formed in the swirl recovery vane at predetermined locations along the span of the swirl recovery vane.

Particular embodiments further may include at least one, or a plurality of, the following optional features, alone or in combination with each other:

A further embodiment of any of the foregoing embodiments may additionally and/or alternatively includethe gas turbine engine with a swirl recovery vane with acoustic treatment further comprising the acoustic treatment formed within the acoustic zone; the acoustic treatment configured to dissipate sound energy.

A further embodiment of any of the foregoing embodiments may additionally and/or alternatively include the acoustic zone is located on the pressure side.

A further embodiment of any of the foregoing embodiments may additionally and/or alternatively include the gas turbine engine with a swirl recovery vane with acoustic treatment further comprising a surface skin in operative communication with the acoustic zone and the acoustic treatment.

A further embodiment of any of the foregoing embodiments may additionally and/or alternatively include the acoustic zone extends at least one of spanwise through the swirl recovery vane between the attachment region and the tip region or chordwise between the leading edge and the trailing edge.

In accordance with the present disclosure, there is provided a process for gas turbine engine with a swirl recovery vane with acoustic treatment comprising
locating a propulsor rotor within an open environment; supporting an array of swirl recovery vanes downstream from the propulsor rotor; attaching the array of swirl recovery vanes to a nacelle flow surface; each of the swirl recovery vanes comprising a leading edge and a trailing edge opposite chordwise from the leading edge; a radially inner attachment region opposite spanwise from a radially outer attachment region; coupling the attachment region in operative communication with the nacelle flow surface; a span dimension extending between the attachment region and the tip region; a chord dimension extending between the leading edge and the trailing edge; a pressure side opposite a suction side of the swirl recovery vanes; forming an acoustic zone integral with the swirl recovery vanes; and forming a structural region adjacent the acoustic zone.

Particular embodiments further may include at least one, or a plurality of, the following optional features, alone or in combination with each other:

A further embodiment of any of the foregoing embodiments may additionally and/or alternatively include the process further comprising forming the acoustic zone in the swirl recovery vanes at predetermined locations of the swirl recovery vanes.

A further embodiment of any of the foregoing embodiments may additionally and/or alternatively include the process further comprising forming the acoustic treatment within the acoustic zone; and configuring the acoustic treatment to dissipate sound energy.

A further embodiment of any of the foregoing embodiments may additionally and/or alternatively include the process further comprising locating the acoustic zone on the pressure side.

A further embodiment of any of the foregoing embodiments may additionally and/or alternatively include the process further comprising configuring the acoustic zone extending at least one of spanwise through the swirl recovery vanes between the attachment region and the tip region or chordwise between the leading edge and the trailing edge.

A further embodiment of any of the foregoing embodiments may additionally and/or alternatively include the process further comprising forming a surface skin in operative communication with an exterior of the swirl recovery vanes proximate the acoustic treatment.

A further embodiment of any of the foregoing embodiments may additionally and/or alternatively include the process further comprising shaping the acoustic zone to influence acoustic dampening capability in the proximity of the swirl recovery vanes.

Other details of the acoustic zone integrally formed in a swirl recovery vane structure are set forth in the following detailed description and the accompanying drawings wherein like reference numerals depict like elements.
Fig. 1 is a schematic representation of a gas turbine engine with unducted rotor exposed to an open environment.
Fig. 2 is a sectional view of schematic representation of the exemplary swirl recovery vane with acoustic treatment.

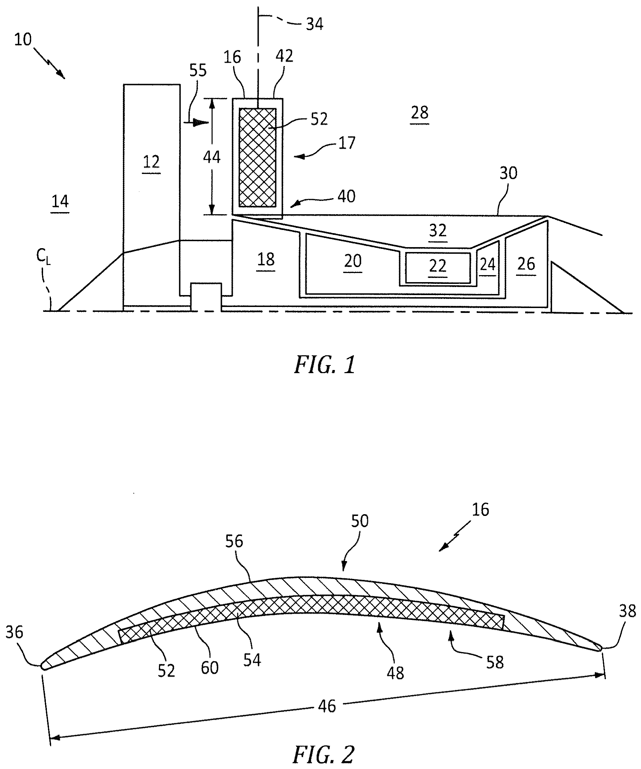

Referring now to Fig. 1 showing a schematic of a gas turbine engine 10. The gas turbine engine 10 includes a propulsor rotor 12 proximate an engine inlet 14. An open rotor core gas generator inlet may be as shown or reversed as in a reverse flow configuration e.g., inlet for the core located at a downstream end of the gas turbine engine 10 to support a reverse core). Though not depicted as an inlet for air entering the core, one skilled in the art understands that an engine inlet enables a flow of core air into the gas turbine engine 10. Downstream from the propulsor rotor 12 is a swirl recovery vane 16. The gas turbine engine 10 can be an open rotor engine centered about centerline CL. The swirl recovery vanes 16 can be arranged as an array 17 configured about the centerline CL or another centerline. The gas turbine engine 10 includes sections listed from forward toward aft, such as, a low pressure compressor (LPC) 18, high pressure compressor (HPC) 20, combustor (COMB) 22, high pressure turbine (HPT) 24, and low pressure turbine (LPT) 26. The orientation of sections 18-26 may be arranged in a different orientation from what is shown in Fig. 1, such as in a reverse core orientation, such as with a reversed inlet (not shown) with a reversed engine inlet 14. An open environment 28 is exterior to a nacelle flow surface 30.

The nacelle flow surface 30 is shown bounding a core compartment 32. The core compartment 32 encloses the above listed gas turbine engine 10 sections. The gas turbine engine 10 can include various propulsion system architectures including a tractor (propulsor rotor and swirl recovery vane at an upstream end of the propulsion system) and a pusher (propulsor rotor and swirl recovery vane at a downstream end of the propulsion system) architectures. In a pusher architecture, the swirl recovery vanes 16 in an optional embodiment may be upstream of the propulsor rotor 12 and may act to preswirl the air rather than recover swirl.

The swirl recovery vane 16 extends into the open environment 28. The swirl recovery vane 16 is in operative communication with the nacelle flow surface 30. The swirl recovery vane 16 includes a vane stacking axis 34 that is largely radially aligned with respect to the centerline CL. The swirl recovery vane 16 can be a cantilever supported structure. In an exemplary embodiment, the swirl recovery vane 16 can have a variable pitch.

With reference also to Fig. 2, the swirl recovery vane 16 includes a leading edge 36 and a trailing edge 38 opposite chordwise from the leading edge 36. The swirl recovery vane 16 includes a pressure side 48 and a suction side 50.

The swirl recovery vane 16 includes an attachment region 40 proximate the nacelle flow surface 30. The attachment region 40 of the swirl recovery vane 16 attaches to the nacelle flow surface 30 or a variable pitch mechanism contained within the nacelle flow surface 30 (not shown in the figures). The swirl recovery vane 16 includes a tip region 42 opposite the attachment region 40.

The swirl recovery vane 16 includes a span 44 dimension extending between the attachment region 40 and the tip region 42. The swirl recovery vane 16 includes a chord dimension 46 extending between the leading edge 36 and the trailing edge 38, as seen in Fig 2. The swirl recovery vane 16 can include a pressure side 48 and a suction side 50 opposite the pressure side 48.

The swirl recovery vane 16 shown in Fig 1 is oriented generally vertical, that is along a radial direction, that follows the vane stacking axis 34 relative to the centerline CL axis of the array 17 or can include a canted orientation. In an exemplary embodiment, the vane stacking axis can be canted aft, that is the attachment region 40 is forward of the tip region 42.

The swirl recovery vane 16 can be constructed employing additive manufacturing techniques. The swirl recovery vane 16 can include an acoustic treatment 52. The acoustic treatment 52 can be any material or structure configured to dissipate sound energy. The acoustic treatment 52 can include various materials and/or structures with sound-absorbing and diffusing properties. In an exemplary embodiment the acoustic treatment 52 can provide a broadband noise benefit from about 1 to 5 EPNdB. The acoustic treatment 52 can be varied from one swirl recovery vane 16 to another. The variation can be by varying the materials, the shape and the location of the acoustic treatment 52 on each swirl recovery vane 16 in the array 17. The materials of the acoustic treatment 52 can include, but are not limited to composites, metals, plastics, foams, and the like. The acoustic treatment 52 is porous and/or shaped in a form that includes a plurality of cavities with a high surface area to fill ratio (e.g., many nooks and crannies) to enable the acoustic energy to enter and dissipate within. That is, the acoustic zone 54 can be shaped to influence the acoustic dampening capability thereof. For example, the material may include a honeycomb structure, which enables significant acoustic dampening.

The acoustic treatment 52 can be formed integral with the swirl recovery vane 16. The acoustic treatment 52 can be formed within an acoustic zone(s) 54 adjacent a structural region 56 as seen in cross section at Fig. 2. The acoustic zone 54 can have a rectangular cross section and/or shape, oval cross section and/or shape, tee shaped cross section and/or shape and the like (e.g., different shapes and/or cross sections, combinations of cross sections, etc.). The acoustic zone 54 can be formed in the swirl recovery vane 16 at predetermined location(s) along the span 44 of the swirl recovery vane 16 as seen in Fig. 2. The acoustic zone 54 can be aligned along the span 44. The acoustic zone 54 can be aligned chordwise.

The acoustic zone 54 can be configured to be constructed integrally utilizing additive manufacturing techniques, when creating the swirl recovery vane 16. The acoustic zone(s) 54 can allow for acoustic dampening features manufactured directly into the parent material along with the structural region(s) 56 of the swirl recovery vane 16. The location(s) and shape(s)of the acoustic zone 54 can be dependent on the design of the swirl recovery vane 16 final count/aero design, acoustic and attachment structural requirements. The acoustic zone 54 can be shaped to influence the acoustic capability in the proximity of the swirl recovery vane 16. The acoustic treatment 52 can be formed at a partial depth from the exterior 58 of the swirl recovery vane 16. The structure orientation, size, shape and density of the sponge-like acoustic treatment 52 can be varied and optimized to balance the structure requirements, durability/life requirements and acoustic benefits of the swirl recovery vane 16. In an exemplary embodiment, the acoustic treatment 52 can have an effective density of 25% or less relative to the remainder of the material forming the swirl recovery vane 16. Effective density can include the air in any hollow regions/pockets that are inherent due to the porous structure. The acoustic treatment 52 can be integrated on either the pressure side 48 or suction side 50.

A surface skin 60 as seen in Fig. 2 can be in operative communication with the acoustic zone 54 and the acoustic treatment 52. The surface skin 60 can be applied over acoustic zone 54 configured for aerodynamic benefit to the swirl recovery vane 16. The surface skin 60 can allow the sound energy to pass through and penetrate the acoustic treatment 52. The surface skin 60 can be additively manufactured in the same operation as the rest of the swirl recovery vane 16 and acoustic treatment 52.

A technical advantage of the disclosed acoustic zone integrally formed in a swirl recovery vane structure includes a capacity to dampen acoustic noise along the surfaces of swirl recovery vanes.

Another technical advantage of the disclosed acoustic zone integrally formed in a swirl recovery vane structure includes structural features formed in the swirl recovery vane structure configured to receive acoustic panels.

Another technical advantage of the disclosed acoustic zone integrally formed in a swirl recovery vane structure includes tailored acoustic treatment.

Another technical advantage of the disclosed acoustic zone integrally formed in a swirl recovery vane structure includes a pattern of acoustic treatment integrally formed within swirl recovery vanes enabling both aero and structural function.

There has been provided an acoustic zone integrally formed in a swirl recovery vane structure. While the acoustic zone integrally formed in a swirl recovery vane structure has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A swirl recovery vane comprising:
a leading edge and a trailing edge opposite chordwise from the leading edge; an attachment region opposite spanwise from a tip region; a span dimension extending between the attachment region and the tip region; a chord dimension extending between the leading edge and the trailing edge; a pressure side opposite a suction side of the swirl recovery vane;
an acoustic zone formed within the swirl recovery vane.

2. The swirl recovery vane according to claim 1, wherein the acoustic zone is formed in the swirl recovery vane at a predetermined location along the span of the swirl recovery vane.

3. The swirl recovery vane according to claim 1 or 2, wherein the acoustic zone is located on the pressure side of the swirl recovery vane.

4. The swirl recovery vane according to any of claims 1 to 3, wherein the acoustic zone extends at least one of spanwise through the swirl recovery vane between the attachment region and the tip region or chordwise between the leading edge and the trailing edge.

5. The swirl recovery vane according to any of claims 1 to 4, wherein the acoustic treatment is formed within the acoustic zone, and the acoustic treatment is configured to dissipate sound energy.

6. The swirl recovery vane according to any of claims 1 to 5, wherein the acoustic zone is configured integral with the material of the swirl recovery vane.

7. The swirl recovery vane according to any of claims 1 to 6, wherein the acoustic zone is located adjacent a structural region.

8. The swirl recovery vane according to any of claims 1 to 7, further comprising:
a surface skin in operative communication with the acoustic zone and the acoustic treatment.

9. A gas turbine engine with a swirl recovery vane with acoustic treatment comprising:
a propulsor rotor located within an open environment;
an array of swirl recovery vanes supported downstream from the propulsor rotor, the array of swirl recovery vanes attached to a nacelle flow surface;
a swirl recovery vane of the array of swirl recovery vanes comprising a configuration as claimed in any of claims 1 to 8 and a structural region adjacent the acoustic zone.

10. A process for creating a swirl recovery vane with acoustic treatment comprising:
supporting an array of swirl recovery vanes downstream from a location associated with a propulsor rotor in an open environment;
attaching the array of swirl recovery vanes to a nacelle flow surface by;
coupling an attachment region of a swirl recovery vane of the array of swirl recovery vanes in operative communication with the nacelle flow surface;
forming an acoustic zone integral with the swirl recovery vanes; and
forming a structural region adjacent the acoustic zone.

11. The process according to claim 10, further comprising:
forming the acoustic zone in the swirl recovery vane at a predetermined location of the swirl recovery vane.

12. The process according to claim 10 or 11, further comprising:
forming the acoustic treatment within the acoustic zone; and
configuring the acoustic treatment to dissipate sound energy.

13. The process according to any of claims 10 to 12, further comprising:
locating the acoustic zone on a pressure side of the swirl recovery vane.

14. The process according to any of claims 10 to 13, further comprising:
configuring the acoustic zone extending at least one of spanwise through the swirl recovery vane between the attachment region and the tip region or chordwise between a leading edge and a trailing edge of the swirl recovery vane.

15. The process according to any of claims 10 to 14, further comprising:
forming a surface skin in operative communication with an exterior of the swirl recovery vanes proximate the acoustic treatment; and/or
further comprising:
shaping the acoustic zone to influence acoustic dampening capability in the proximity of the swirl recovery vane.
